# EUROPEAN PATENT SPECIFICATION

(11) **EP 3 059 298 B1**
(45) Date of publication and mention of the grant of the patent: **14.11.2018**
(21) Application number: 15183569.1
(22) Date of filing: 02.09.2015
(51) Int. Cl.: C11B 1/04, C11B 1/06, C11B 1/10, A23N 1/02

(54) **PROCESS FOR PRODUCING VIRGIN OLIVE OIL**
VERFAHREN ZUR HERSTELLUNG VON NATIVEM OLIVENÖL
PROCÉDÉ PERMETTANT DE PRODUIRE DE L'HUILE D'OLIVE VIERGE

(43) Date of publication of application: 24.08.2016
(73) Proprietor: Alfa Laval Corporate AB, 221 00 Lund (SE)
(72) Inventor: SERVILI, Maurizio, 06126 PERUGIA (PG) (IT); FAZIO, Domenico, 50127 FIRENZE (FI) (IT); BETTI, Matteo, 50028 TAVARNELLE VAL DI PESA (FI) (IT); COSTAGLI, Giacomo, 20154 MILANO (IT)
(74) Representative: Alfa Laval Attorneys

(56) References cited:
- EP-A1- 2 248 880
- EP-A1- 2 535 399
- EP-A1- 2 596 707
- WO-A1-2014/181284
- US-A- 4 522 119
- LUZ-STELLA ARTAJO ET AL: "Partition of phenolic compounds during the virgin olive oil industrial extraction process", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 225, no. 5-6, 15 September 2006 (2006-09-15), pages 617-625, XP019537686, ISSN: 1438-2385
- Anonymous: "Malaxation - Wikipedia, the free encyclopedia", , 24 August 2014 (2014-08-24), XP055253907, Retrieved from the Internet: URL:https://en.wikipedia.org/wiki/Malaxati on [retrieved on 2016-02-29]

## Description

### Background of the invention

The present invention refers to process for producing virgin olive oil. As is known, there are two main mechanical processes for extracting oil from olives. The first process, more conventional and discontinuous, includes a first step of crushing the olives with granite mill stones, a second step of kneading, followed by the extraction of the oil by means of pressure, and a subsequent centrifugal separation of the light solids from the oil.

A second process, more modern, uses continuous mechanical mills of various types in order to obtain the paste of ground olives. This second process, also called "continuous cycle", involves the use of several machines connected in series with each other and prevents any interruption in the processing. Usually one or more of each of the following four different types of machines are connected with each other: a continuous mechanical mill (such as for example a hammer mill or disc mill) or pitter, a kneading tank, a centrifuge with horizontal axis with continuous unloading of the solids (decanter) and a centrifuge with vertical axis provided with separation discs (separator).

The reduction of the olives into paste occurs in the mill or pitter and, already in this step, there is a first, even if partial, separation of the oil from the paste. The olive paste thus produced, however, due to the breakage of the fruit with rotating members, undergoes an uncontrolled heat increase.

The olive paste is then pumped or thrust, through a screw system, which is positioned within one or more kneading tanks provided with respective chambers. Hot water circulates within the chamber(s) for the gradual heating of the paste to a final kneading temperature (generally 25°C-35°C and, more specifically, 28°C-32°C). At the same time, in each kneading tank the olive paste is continuously mixed. The gradual heating and continuous mixing is usually performed for a period of about 30-60 minutes. A kneading tank therefore has the object, through a mechanical and biochemical action in a temperature-controlled environment, to carry out the extraction of the oil from the olive paste by means of remixing, which facilitates the action of the endogenous enzymes of the olives capable of hydrolyzing the cell wall of the tissues containing the oil, thus freeing the oil from the paste. The heating of the olive paste, however, occurs over long time periods (usually about 30-60 minutes as mentioned above), due to the poor heat exchange efficiency of the kneading tanks and of the heat inertia tied to the product mass to be treated with respect to the quantity of water necessary for the heating itself.

Thus, inside each kneading tank, the combined effect of the time, the temperature and the remixing allows obtaining the breakage, mechanically and enzymatically, of the cell membranes or, more precisely, the lysis of the lipoprotein membranes that enclose the minute oil drops in the vacuoles. There is therefore the consequent outflow of oil, water and other components, e.g. phenolic compounds and pigments, which are dispersed in the mass, while the oil drops are enlarged and are aggregated via coalescence, being enriched with volatile and phenolic compounds that constitute the most precious part of unsaponifiable fraction of virgin olive oil, which confer aroma taste and health properties.

A kneading tank normally comprises a homogenization tank equipped with rotating mixer blades of suitable shape, usually in screw or worm screw form, moved by a motor. This blade system is commonly known with the name of "reel". The tank is at least partially surrounded by a chamber in which the hot water is made to circulate.

A pump then transfers the kneaded paste to the decanter, which is an extractive centrifuge, normally with horizontal drum, configured for separating the oil from the solid and aqueous phase, so-called olive residues. The oily phase obtained from the decanter is finally centrifuged in a separator, normally with vertical axis, for a final removal of the water and solid residues. The virgin oil thus obtained can be directly sold, with or without a previous filtration step.

EP 2248880 describes a kneading system for olives, wherein the olive paste coming from a crushing station is heated in a conveyor device designed to transfer it towards the kneading station.

In the processes for producing virgin olive oil, the current trend is that of anticipating the conventional fruit harvest period (i.e. the current trend is early harvesting), so as to produce oil with greater quality starting from olives with an early ripening stage. Both in conventional areas of the Mediterranean basin, and in new geographic areas for the cultivation of olives in, for example, South America, South Africa and Australia, the early olive harvest period and conventional olive harvest period may coincide with periods of the year in which the climate is still hot. The collection of olives at high ambient temperatures leads to a high temperature of the collected olives before being processed.

A high temperature of the collected olives may compromise the possibility to produce a high quality virgin olive oil in the conventional continuous cycle extraction process. In particular, a high temperature applied starting from the step of crushing the olives may negatively modify the aromatic composition and reduce the phenolic concentration of the virgin olive oil.

### Summary of the invention

One object of the present invention is therefore to provide a process for producing virgin olive oil which are capable of resolving the abovementioned drawbacks of the prior art in a simple, inexpensive and particularly functional manner.

In detail, one object of the present invention is to provide a process for producing virgin olive oil which are capable of providing, even starting from "hot" olives, an improved quality of the obtained oil by providing an increase of the phenolic concentration and/or an increase of volatile compounds related to virgin olive oil, flavoring the obtained oil.

Another object of the present invention is to provide a process for producing virgin olive oil which are capable of ensuring the maintenance of the extractive yields with respect to analogous processes according to the prior art.

A further object of the present invention is to provide a process for producing virgin olive oil which allow, in specific operating conditions, a reduction of the mixing times.

These objects are achieved according to the present invention by providing a process for producing virgin olive oil as set forth in the attached claims. Namely: A process for producing virgin olive oil, the process comprising the steps of:- production of an oily paste by means of crushing of olives; - instantaneous cooling of the oily paste to a first temperature value, so as to reduce degradation of phenolic compounds and/or to increase the formation of volatile compounds influencing the aroma of the virgin olive oil, by means of at least one first thermal conditioner, wherein said at least one first thermal conditioner is a tubular heat exchanger comprising one or more coil ducts through which the heat exchange occurs in counter-current between the oily paste and a specific heat exchange fluid, wherein said first temperature value is a temperature value within a range of 14°C-24°C and wherein said cooling is performed after the crushing step; - gradual heating to a final kneading temperature and continuous mixing of the oily paste for a predefined time period, so as to obtain depolymerizing liberation of oil drops by means of enzymatic activity and coalescence of oil drops, which allows the subsequent extraction thereof; - separation of the oily paste into an oily phase and into a solid and aqueous phase; and - final removal of the water and solid residues from the oily phase in order to obtain the virgin olive oil.

Further characteristics of the invention are underlined by the dependent claims, which are an integral part of the present description.

In general, the process for producing virgin olive oil according to the present invention provide for the thermal conditioning/cooling of the paste immediately after the step of crushing the olives. The thermal conditioning/cooling, which is obtained by means of the introduction of a heat exchanger for oily pastes, allows controlling endogenous enzymatic activity of the pastes themselves, thereby facilitating the increase of production of volatile compounds, which influence the aroma of the oil, and/or thereby facilitating the reduction of the degradation of the phenolic compounds, with the consequent increase of the final quality of the produced oil.

### Brief description of the drawings

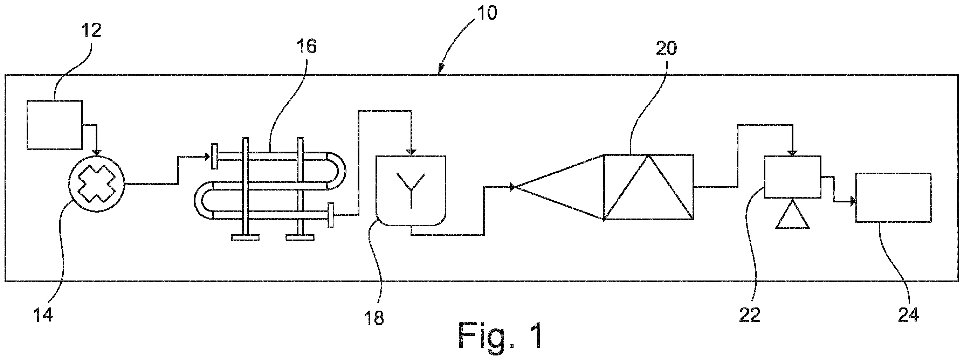

The characteristics and advantages of a process for producing virgin olive oil according to the present invention and a related plant will be clearer from the following exemplifying and non-limiting description, with reference to the enclosed schematic drawings, in which the single figure, Fig. 1, is a schematic view of the main components of such a plant.

### Detailed description of the preferred embodiments

With reference to the figure, one option of a plant is shown for producing virgin olive oil according to the present invention. The plant is indicated overall with the reference number 10. The plant 10 is configured for actuating a process of extraction of the virgin olive oil which includes the production of a paste starting from whole olives that have been previously cleaned and washed. Consequently, the still-whole olives, following the collection from the respective plants, are previously fed to at least one washing tank 12. As shown in the figure, the at least one washing tank 12 may be comprised in the plant 10. However, alternatively, no washing tank is comprised in the plant 10 whereby the whole olives may be cleaned and washed in one or more washing tanks or other devices not comprised in the plant 10.

Downstream of the at least one washing tank 12, at least one crushing device 14 is placed. With "crushing device" it is herein meant a mill device or a pitter device. The production of the olive paste may in fact be obtained both by crushing the whole fruits and by only crushing the pulp and the skin of the olives, simultaneously separating the pit. In the first case, a mill device is used which for example may be equipped with rotating hammers or knives which operate against a perforated grating, or with two counter-rotating toothed discs. In the second case, a pitter device is used that is equipped with rotating blades which operate against a perforated basket.

However, independent of the type, the crushing device 14 is configured for producing an oily paste. The paste thus obtained undergoes, due to the crushing operation, a thermal heating that has a negative effect on the composition of the aromatic fraction and on the phenolic concentration of the oil that will be obtained at the end of the extraction process. Such negative effect is greater the higher the temperature of the oily paste at the outlet of the crushing device 14. In turn, the temperature of the oily paste at the outlet of the crushing device 14 is higher the higher the temperature of the olives fed to the crushing device 14, which in turn depends on the ambient temperature during harvest and on the method of preservation of the fruits before being processed.

For these reasons, the plant 10 described herein comprises, downstream of the crushing device 14, at least one first thermal conditioner 16 configured to instantly cool the oily paste to a first temperature value in order to reduce degradation of phenolic compounds and/or increase the formation of volatile compounds influencing the aroma of the virgin olive oil. The phrase "instantly cool" is herein intended to denote that the first thermal conditioner 16 is configured to cool the paste to the first temperature value within a very short time, i.e. within seconds, after the paste has been fed to the first thermal conditioner 16, in contrast to a gradual temperature adjustment over a longer time, i.e. several minutes. Thus, the paste is then pumped, immediately after the step of crushing, to the first thermal conditioner 16 which has the object of instantaneously cooling it to a first temperature value. By the phrase "immediately after the step of crushing" it is herein meant that no further process steps are present between the step of crushing and the step of cooling by means of the first thermal conditioner 16, i.e. there are no further process devices between the at least one crushing device 14 and the at least one first thermal conditioner 16. The immediate thermal lowering of the paste to a first temperature value after the step of crushing is performed in order to control the endogenous enzymatic activity so as to reduce the degradation of phenolic compounds and/or to increase the formation of volatile compounds influencing the aroma of the virgin olive oil.

The first temperature value is a value in a first temperature range, within which the enzymatic activity of one or more endogenous enzymes causing degradation of one or more phenolic compounds is reduced or inhibited (compared to the enzymatic activity before the cooling) and/or within which the enzymatic activity of one or more endogenous enzymes providing production of one or more volatile compounds is increased (compared to the enzymatic activity before the cooling).

The limits of the first temperature range as well as the optimum value of the first temperature depend on a number of factors including the olive variety being processed, the ripeness of the olives being processed, climate conditions, etc.

In one embodiment, the first temperature range is 15°C-20°C. In another embodiment, the first temperature range is 14°C-18°C. In still another embodiment, the first temperature range is 18°C-22°C. According to the invention the first temperature range is 14°C-24°C. In a still further embodiment, the first temperature range is 14°C-20°C.

The first thermal conditioner 16 is of tubular type, a tubular heat exchanger comprising one or more coil ducts through which the heat exchange occurs in counter-current between the oily paste and a specific heat exchange fluid (generally cooled or heated water).

Downstream of the at least one first thermal conditioner 16, at least one kneading tank 18 is provided in a *per se* known manner, configured for carrying out a gradual heating to a final kneading temperature (i.e. malaxation temperature), and a continuous mixing of the paste. For example, the final kneading temperature may be within the range of 25°C-35°C, or within the range of 28°C-32°C, or within the range of 25°C-30°C. The heating is obtained through a chamber, filled with hot water, which at least partially surrounds the kneading tank 18. The mixing is obtained through a rotating reel with horizontal axis, provided with suitably shaped blades, placed inside the kneading tank 18. The paste remains in the kneading tank 18 for a predefined time period (for example about 30-60 minutes), during which an enzymatic activity occurs that is necessary for the depolymerizing liberation of the oil drops and for the coalescence thereof, which allows the subsequent extraction thereof.

The predefined time period of the kneading step can even be reduced up to about 50% with respect to conventional kneading times, if - following the cooling of the oily paste carried out in the first thermal conditioner 16 - a heating of the paste itself is also carried out. Consequently, the plant 10 can be optionally provided, downstream of the at least one first thermal conditioner 16 and upstream of the at least one kneading tank 18, with at least one second thermal conditioner (not shown) configured for heating the paste to a second temperature value. The second temperature value is of course greater than the aforesaid first temperature value. In addition, the second temperature value is lower than or equal to the above mentioned final kneading temperature. Like the first thermal conditioner 16, also the second thermal conditioner can be of tubular type, i.e. it can be a tubular heat exchanger comprising one or more coil ducts through which the heat exchange occurs in counter-current between the oily paste and a specific heat exchange fluid.

Downstream of the at least one kneading tank 18, the plant 10 comprises at least one horizontal centrifuge or decanter 20. After the kneading step, the paste is then pumped into the horizontal centrifuge or decanter 20 where the separation of the paste into an oily phase and into a solid and aqueous phase is carried out.

The oily phase obtained through the horizontal centrifuge or decanter 20 is finally centrifuged by means of at least one vertical centrifuge or separator 22. The vertical centrifuge or separator 22 is in fact arranged for carrying out a final removal of the water and solid residues from the oily phase. The virgin oil thus obtained can be directly sold, with or without a step of previous filtration that can be carried out in a suitable filtering device 24 placed downstream of the vertical centrifuge or separator 22.

### Examples

The phenolic composition of virgin olive oils (Table 1) shows a modification due to the pastes cooling after crushing. In fact, the rapid temperature lowering of olive pastes at 15°C, caused by the thermal conditioner 16 that performs a flash thermal conditioning (FTC) in a plant according to Fig. 1, produces an increase of the phenolic concentration of the oils obtained, compared to the corresponding control in a plant according to Fig. 1 but without the thermal conditioner 16. This increase affects the content of oleuropein derivatives (3,4-DHPEA-EDA and 3,4-DHPEA-EA) and ligstroside (*p*-HPEA-EDA), whereas the lignans did not show any significant variation. This behavior can be related to the partial inhibition of the endogenous polyphenoloxidase and peroxidase, responsible for the degradation of the phenolic compounds, because these enzymes show a low activity at temperatures below 20°C. The composition of volatiles (Table 2) found in virgin olive oil are positively affected by the cooling of the olive paste increasing the esters concentration while on the contrary the aldehydes and alcohol are not modified.

**Table 1.**

| Effect of cooling of pastes by FTC on phenolic composition (mg/kg) of virgin olive oil (*Peranzana* olives). | | |
|---|---|---|
| | **malaxation temperature = 25°C** | |
| | **Control** | **FTC 15°C** |
| 3,4-DHPEA ^{Z} | 1.3 ± 0.1 | 3.8 ± 0.2 |
| *p*-HPEA | 4.9 ± 0.2 | 8.8 ± 0.1 |
| 3,4-DHPEA-EDA | 255.6 ± 1.6 | 405.6 ± 9.6 |
| *p*-HPEA-EDA | 40 ± 0.2 | 74.5 ± 1.1 |
| (+)-1-acetoxypinoresinol | 17.6 ± 0.04 | 16.8 ± 0.1 |
| (+)-pinoresinol | 15.5 ± 0.0 | 15.2 ± 0.5 |
| 3,4-DHPEA-EA | 38.8 ± 0.1 | 72.6 ± 0.9 |
| ligstroside aglycon | 2.7 ± 0.04 | 9.7 ± 0.1 |
| total phenol | 376.4 ± 1.6 | 606.9 ± 9.7 |

^{Z} The data are the mean values of two independent experiments analyzed in duplicate, ± e standard deviation.

**Table 2.**

| Effect of cooling of paste by FTC on volatile compounds (µg/kg) of virgin olive oil (*Peranzana* olives). | | | | | | |
|---|---|---|---|---|---|---|
| | **malaxation temperature = 25°C** | | | | | |
| | **Control** | | | **FTC 15°C** | | |
| ***aldehydes*** | | | | | | |
| (E)-2-pentenal ^{Z} | 218 | ± | 3 | 217 | ± | 5 |
| hexanal | 1433 | ± | 6 | 1439 | ± | 81 |
| (E)-2-hexenal | 138950 | ± | 7990 | 141265 | ± | 498 |
| (E,E)-2,4-hexadienal | 2613 | ± | 168 | 2575 | ± | 22 |
| (E,E)-2,4-hexadienal (i) | 1632 | ± | 170 | 1765 | ± | 6 |
| *sum of the aldehydes* | *144846* | *±* | *7994* | *147261* | *±* | *505* |

| ***alcohols*** | | | | | | |
|---|---|---|---|---|---|---|
| 1-penten-3-ol | 786 | ± | 4 | 779 | ± | 11 |
| (E)-2-penten-1-ol | 766 | ± | 0 | 864 | ± | 26 |
| 1-hexanol | 1023 | ± | 34 | 1135 | ± | 8 |
| (Z)-3-hexen-1-ol | 1005 | ± | 11 | 1060 | ± | 18 |
| (E)-2-hexen-1-ol | 1678 | ± | 49 | 1375 | ± | 39 |
| *sum of the alcohols* | *5258* | *±* | *61* | *5213* | *±* | *52* |

| ***esters*** | | | | | | |
|---|---|---|---|---|---|---|
| hexyl acetate | 952 | ± | 13 | 2616 | ± | 131 |
| (Z)-3-hexenyl acetate | 1083 | ± | 37 | 1793 | ± | 106 |
| *sum of the esters* | *2035* | *±* | *40* | *4409* | *±* | *168* |

^{Z} The data are the mean values of two independent experiments analyzed in duplicate, ± e standard deviation.

It is thus seen that the process for producing virgin olive oil according to the present invention achieves the previously outlined objects, in particular obtaining the following advantages:
- increase of the phenolic concentration in the obtained oil;
- increase of volatile compounds responsible for virgin olive oil flavor;
- maintenance of the extractive yields with respect to the systems according to the prior art;
- reduction of the kneading times if the thermal conditioner for heating is also applied.

The process for producing virgin olive oil of the present invention thus conceived are susceptible in any case of numerous modifications and variants, all falling within the same inventive concept; in addition, all the details can be substituted by technically equivalent elements. In practice, the materials used, as well as the shapes and size, can be of any type according to the technical requirements.

## Claims

1. Process for producing virgin olive oil, the process comprising the steps of:
- production of an oily paste by means of crushing of olives;
- instantaneous cooling of the oily paste to a first temperature value, so as to reduce degradation of phenolic compounds and/or to increase the formation of volatile compounds influencing the aroma of the virgin olive oil, by means of at least one first thermal conditioner, wherein said at least one first thermal conditioner is a tubular heat exchanger comprising one or more coil ducts through which the heat exchange occurs in counter-current between the oily paste and a specific heat exchange fluid, wherein said first temperature value is a temperature value within a range of 14°C-24°C and wherein said cooling is performed after the crushing step;
- gradual heating to a final kneading temperature and continuous mixing of the oily paste for a predefined time period, so as to obtain depolymerizing liberation of oil drops by means of enzymatic activity and coalescence of oil drops, which allows the subsequent extraction thereof;
- separation of the oily paste into an oily phase and into a solid and aqueous phase; and
- final removal of the water and solid residues from the oily phase in order to obtain the virgin olive oil.

2. Process according to claim 1, **characterized in that** said first temperature value is a temperature value within the range of 15°C-20°C.

3. Process according to claim 1 or 2, **characterized in that** said final kneading temperature is a temperature within the range of 25°C-30°C.

4. Process according to any one of claims 1 to 3, **characterized in that** it comprises, downstream of the step of instantaneous cooling and upstream of the step of gradual heating and continuous mixing of the oily paste, a step of heating the oily paste to a second temperature value, wherein said second temperature value is greater than said first temperature value and wherein said second temperature value is lower than or equal to said final kneading temperature.

5. Process according to any one of claims 1 to 4, **characterized in that** it comprises, upstream of the step of producing an oily paste by means of crushing of the olives, a step of washing the olives.

6. Process according to any one of claims 1 to 5, **characterized in that** it comprises, downstream of the final removal of the water and solid residues from the oily phase, a step of filtering the virgin oil.

## Patentansprüche

1. Verfahren zur Herstellung von nativem Olivenöl, wobei das Verfahren die Schritte umfasst des:
- Herstellens einer ölhaltigen Paste durch Zerdrücken von Oliven;
- sofortigen Kühlens der ölhaltigen Paste auf einen ersten Temperaturwert, um den Abbau von phenolischen Verbindungen zu reduzieren und/oder die Bildung flüchtiger Verbindungen, die das Aroma des nativen Olivenöls beeinflussen, durch mindestens ein erstes thermisches Verbesserungsmittel zu erhöhen, wobei das mindestens eine erste thermische Verbesserungsmittel ein röhrenförmiger Wärmeaustauscher ist, der eine oder mehrere Spiralröhren umfasst, durch die der Wärmeaustausch im Gegenstrom zwischen der ölhaltigen Paste und einem spezifischen Wärmeaustauschfluid erfolgt, wobei der erste Temperaturwert ein Temperaturwert innerhalb eines Bereich von 14 °C - 24 °C ist und wobei das Kühlen nach dem Zerdrückungsschritt ausgeführt wird;
- allmählichen Erhitzens auf eine endgültige Knettemperatur und kontinuierlichen Mischens der ölhaltigen Paste für eine vordefinierte Zeitspanne , um eine entpolymerisierende Freisetzung von Öltropfen durch enzymatische Aktivität und Koaleszenz von Öltropfen zu erhalten, was die darauffolgende Extraktion davon gestattet;
- Trennens der ölhaltigen Paste in eine ölhaltige Phase und in eine feste und wässrige Phase; und
- abschließenden Entfernens des Wassers und der festen Rückstände von der ölhaltigen Phase, um das native Olivenöl zu erhalten.

2. Verfahren nach Anspruch 1, **dadurch gekennzeichnet, dass** der erste Temperaturwert ein Temperaturwert innerhalb des Bereichs von 15 °C - 20 °C ist.

3. Verfahren nach Anspruch 1 oder 2, **dadurch gekennzeichnet, dass** die endgültige Knettemperatur eine Temperatur innerhalb des Bereichs von 25 °C - 30 °C ist.

4. Verfahren nach einem der Ansprüche 1 bis 3, **dadurch gekennzeichnet, dass** es stromabwärts von dem Schritt des sofortigen Kühlens und stromaufwärts von dem Schritt des allmählichen Erhitzens und kontinuierlichen Mischens der ölhaltigen Paste einen Schritt des Erhitzens der ölhaltigen Paste auf einen zweiten Temperaturwert umfasst, wobei der zweite Temperaturwert höher als der erste Temperaturwert ist und wobei der zweite Temperaturwert niedriger als oder gleich wie die erste Knettemperatur ist.

5. Verfahren nach einem der Ansprüche 1 bis 4, **dadurch gekennzeichnet, dass** es stromaufwärts von dem Schritt des Herstellens einer ölhaltigen Paste durch Zerkleinern der Oliven einen Schritt des Waschens der Oliven umfasst.

6. Verfahren nach einem der Ansprüche 1 bis 5, **dadurch gekennzeichnet, dass** es stromabwärts von der endgültigen Entfernung des Wassers und der festen Rückstände von der ölhaltigen Phase einen Schritt des Filtrierens des nativen Öls umfasst.

## Revendications

1. Procédé de production d'huile d'olive vierge, le procédé comprenant les étapes de:
- production d'une pâte huileuse par concassage d'olives;
- refroidissement instantané de la pâte huileuse à une première valeur de température, afin de réduire la dégradation des composés phénoliques et/ou d'accroître la formation des composés volatils influençant l'arôme de l'huile d'olive vierge, à l'aide d'au moins un premier conditionneur thermique, où ledit au moins premier conditionneur thermique est un échangeur de chaleur tubulaire comprenant une ou plusieurs conduites spiralées à travers lesquelles l'échange de chaleur se produit en contre-courant entre la pâte huileuse et un fluide d'échange de chaleur spécifique, où ladite première valeur de température est une valeur de température située dans une plage de 14°C à 24°C et où ledit refroidissement est effectué après l'étape de concassage;
- chauffage progressif jusqu'à une température de malaxage finale et mélange continu de la pâte huileuse sur une durée prédéfinie, afin d'obtenir une libération par dépolymérisation des gouttes d'huile à l'aide de l'activité enzymatique et de la coalescence des gouttes d'huile, qui permet son extraction ultérieure;
- séparation de la pâte huileuse en une phase huileuse et en une phase solide et aqueuse; et
- élimination finale de l'eau et des résidus solides de la phase huileuse afin d'obtenir l'huile d'olive vierge.

2. Procédé selon la revendication 1, **caractérisé en ce que** ladite première valeur de température est une valeur de température située dans la plage de 15°C à 20°C.

3. Procédé selon la revendication 1 ou 2, **caractérisé en ce que** ladite température de malaxage finale est une température située dans la plage de 25°C à 30°C.

4. Procédé selon l'une quelconque des revendications 1 à 3, **caractérisé en ce qu'**il comprend, en aval de l'étape de refroidissement instantané et en amont de l'étape de chauffage progressif et de mélange continu de la pâte huileuse, une étape de chauffage de la pâte huileuse jusqu'à une seconde valeur de température, où ladite seconde valeur de température est supérieure à ladite première valeur de température et où ladite seconde valeur de température est inférieure ou égale à ladite température de malaxage final.

5. Procédé selon l'une quelconque des revendications 1 à 4, **caractérisé en ce qu'**il comprend, en amont de l'étape de production d'une pâte huileuse par concassage des olives, une étape de lavage des olives.

6. Procédé selon l'une quelconque des revendications 1 à 5, **caractérisé en ce qu'**il comprend, en aval de l'élimination finale de l'eau et des résidus solides de la phase huileuse, une étape de filtration de l'huile vierge.
